# EUROPEAN PATENT APPLICATION

(11) **EP 2 727 556 A1**
(43) Date of publication of application: **07.05.2014**
(21) Application number: 12191158.0
(22) Date of filing: 02.11.2012
(51) Int. Cl.: A61C 17/02

(54) **Oral irrigator**

(71) Applicant: Braun GmbH, 61476 Kronberg (DE)
(72) Inventor: Hilscher, Alexander, 61440 Oberursel (DE); Sauer, Michael, 65520 Bad Camberg (DE); Simeth, Martin, 61462 Königstein (DE); Vetter, Ingo, 61184 Karben (DE)
(74) Representative: Schneider, Stefan Michael

(57) **Abstract**

An oral irrigator is provided that has a pump unit having at least a first pump being connected or being connectable to at least a first fluid reservoir containing a first fluid, a control unit for controlling the pump unit, at least a first outlet nozzle for emitting fluid pumped from the first fluid reservoir to the first outlet nozzle during operation as a continuous or pulsating fluid jet, wherein the control unit is arranged to control the pump unit during operation in at least a first operation mode such that at least a first fluid jet parameter of the continuous or pulsating jet is automatically varied over time.

## Description

### FIELD OF THE INVENTION

The present invention is concerned with an oral irrigator having an outlet nozzle, and in particular with an oral irrigator were a fluid is emitted as a continuous or pulsating jet or stream via the outlet nozzle.

### BACKGROUND OF THE INVENTION

Oral irrigators are known that emit a continuous or a pulsating fluid jet. It is further known to provide a user operable adjustment knob for manually controlling a parameter of the fluid jet such as water pressure or pulse frequency. DE3413277A1 is generally concerned with such a device. By such an adjustment knob, a user can adjust a parameter of the fluid jet such that the fluid jet becomes personalized in this parameter.

It is a desire of the present disclosure to provide an oral irrigator that is improved over the known oral irrigators.

### SUMMARY OF THE INVENTION

In accordance with an embodiment, an oral irrigator is provided that has a pump unit having at least a first pump being connected or being connectable to at least a first fluid reservoir arranged for containing a first fluid, a control unit for controlling the pump unit, at least a first outlet nozzle for emitting fluid pumped from the first fluid reservoir to the first outlet nozzle during operation as a continuous or pulsating fluid jet (or stream), wherein the control unit is arranged to control the pump unit during operation in at least a first operation mode such that at least a first fluid jet parameter of the continuous or pulsating fluid jet is automatically varied over time.

### BRIEF DESCRIPTION OF THE DRAWINGS

The invention will be further elucidated by detailed description of exemplary embodiments and by reference to figures. In the figures
- Fig. 1: is a schematic depiction of an oral irrigator as proposed;
- Fig. 2: is a schematic cross sectional cut through the head part of an oral irrigator attachment;
- Fig. 3A: is a schematic depiction of the variation over time of a fluid jet parameter as achieved by controlling a pump unit via a control unit; and
- Fig. 3B: is a schematic depiction of a further possible time variation of the same fluid jet parameter as shown in Fig. 3A achieved by changing variation parameters.

### DETAILED DESCRIPTION OF THE INVENTION

In accordance with an example embodiment as mentioned above, the oral irrigator as proposed herein automatically varies a parameter of a fluid jet or stream over time. This may in particular serve to automatically adapt the temporal behavior of the fluid stream to a certain application, e.g. massaging the gums, plaque removal etc.

In some example embodiments, the oral irrigator may comprise a second operation mode which a fluid jet parameter is varied over time, which second mode that differs from the first operation mode. In this second mode the same fluid jet parameter may be differently varied than in the first mode. Alternatively a second fluid jet parameter may be varied while the first fluid jet parameter varied in accordance with the first mode is not varied in the second mode. Alternatively, the variation of the second fluid jet parameter may happen in addition (i.e. simultaneously and/or successively) to the variation of the first fluid jet parameter. The first fluid may in particular be water.

In some example embodiments, the oral irrigator may have a first control element for setting at least a first variation parameter used for the temporal variation of the first fluid jet parameter. E.g. in case the first fluid jet parameter is the jet pressure between a first and a second pressure value, the first variation parameter may determine the first pressure value or the second pressure value or the gap between the two pressure values.

In some example embodiments, the oral irrigator may be arranged to emit at least one application substance, e.g. a substance that may be mixed with the first fluid. The application substance may be an antibacterial agent or an inflammatory agent or the application substance may add a mint-type smell. The application substance may be provided as a fluid that is mixed with the first fluid or as a gel, a paste or a solid material, which may (slowly) dissolve into the first fluid during operation.

In some example embodiments, the oral irrigator may be equipped with a second fluid reservoir for containing a second fluid different to the first fluid. The oral irrigator may be arranged to provide the first and the second fluid in alternation. The oral irrigator may also be arranged to provide the second fluid mixed with the first fluid in a constant or (e.g. periodically) varying manner.

In some example embodiments, the oral irrigator may be arranged to have a learning mode in which a time series of data is recorded, which data corresponds to the temporal behavior of the first fluid parameter. This may happen e.g. in a mode where the user can modify the temporal behavior by at least one adjustment element.

In some example embodiments, the oral irrigator may have a timer unit for audibly, visually and/or tangibly indicating a timer value and/or an indication unit for audibly, visually and/or tangibly indicating the operation mode. This allows personalizing the temporal behavior and thus to personalize the kind of treatment and feel provided by the oral irrigator.

In some example embodiments, the oral irrigator may comprise a detachable oral irrigator attachment (which in particular may comprise the outlet nozzle), which attachment may comprise a reservoir in which an application substance is provided.

In the present disclosure, a "continuous fluid jet" means a fluid jet that is always present as a jet over the length of operation (e.g. two minutes as a preset period or between the instant the user switches the oral irrigator on and the time instant the user switches the oral irrigator off), i.e. the continuous fluid jet has no phases where the fluid jet is discontinued. It is also to be understood that all parameters of the continuous fluid jet are kept constant (i.e. unchanging) over time. Thus, a fluid jet having a changing fluid pressure is a constant fluid jet that is varied over time.

A "pulsating fluid jet" is a fluid jet that has a constant pulsation pattern over the length of operation, i.e. all possible fluid jet parameters of the pulsating fluid jet are kept constant besides the fact that the pulsating jet has phases where the fluid jet is discontinued. Within the meaning of the present disclosure, a pulsating fluid jet having a constant pulsation pattern is considered to have no temporally varied fluid jet parameter.

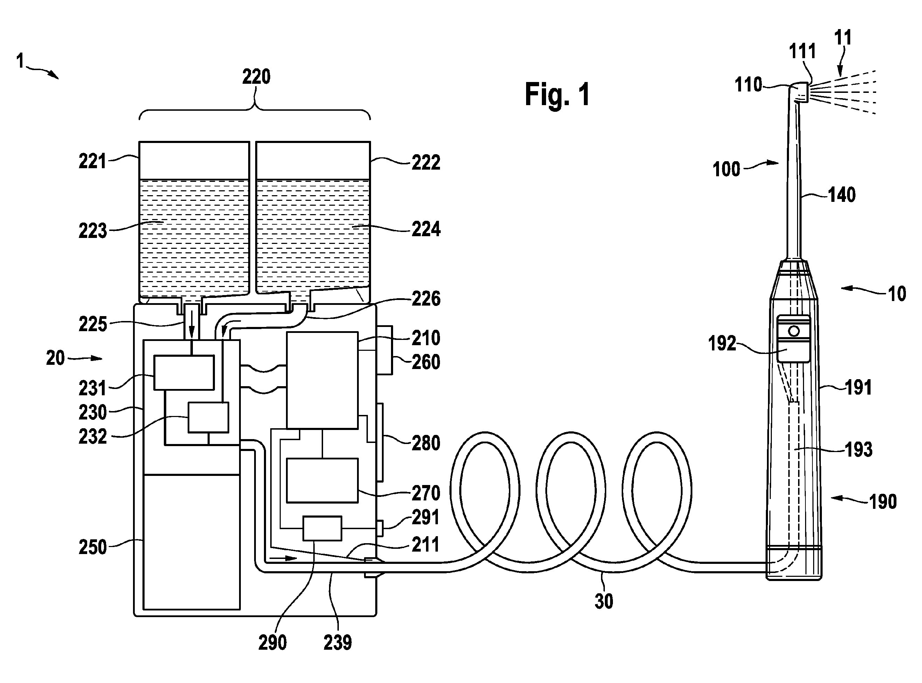

Fig. 1 is a schematic depiction of an example embodiment of an oral irrigator 1 as proposed. The oral irrigator 1 as shown has a mobile part 10 and a base station 20, which are connected by a flexible tube 30. In another embodiment, the oral irrigator may comprise only a mobile part that may be connectable to a water tap, e.g. in the bathroom. Generally, even though in the example embodiment shown in Fig. 1 certain features of the oral irrigator 1 are provided at the base station 20, the present disclosure is not limited to such embodiments; in particular, individual features or all features may be realized at the mobile station (in particular in such embodiments where the oral irrigator has no base station). Further, even though the example embodiment shown in Fig. 1 shows various features of an oral irrigator, it is to be noted that the skilled person may decide which of the features shown are to be realized for a particular oral irrigator in accordance with the present disclosure. In particular, while the embodiment shown in Fig. 1 has two fluid reservoirs, an oral irrigator in accordance with the present disclosure may have only a first fluid reservoir. Thus it shall be understood, that an oral irrigator in accordance with the present disclosure may have at least one of the features discussed or more than one feature, where any feature could be combined together as long as this would not be in contradiction with the gist and scope of the present disclosure.

In Fig. 1, the base station 20 has a reservoir unit 220 that may comprise a first fluid reservoir 221 containing a first fluid 223 and it may have a second fluid reservoir 222 containing a second fluid 224. The first and second fluid reservoirs 221 and 222 may be in fluid connection with a pump unit 230 via first and second fluid channels 225 and 226, respectively. Here, the pump unit 230 may comprise a first pump 231 coupled to the first fluid reservoir 221 via the first fluid channel 225 and a second pump 232 coupled to the second fluid reservoir 222 via the second fluid channel 226. The pump unit 230 is coupled to a control unit210, which control unit 210 is arranged to control the pump unit 230, i.e. in the shown embodiment, the control unit 210 is arranged to control the first pump 231 and the second pump 232 for selective pumping of the first and/or second fluids 223 and 224 from the first and second fluid reservoirs 221 and 222, respectively, to an outlet pipe 239. As a result, the first and second fluid 223 and 224 may be provided via the outlet pipe 239 in a controlled way, e.g. only the first fluid 223 may be provided in a first operation mode, only the second fluid 224 may be provided in another operation mode, and a mixture of the first and second fluids 223 and 224 having a certain mixture ratio, which in particular may be controllable, may be provided a further operation mode.

Generally, in accordance with the present disclosure, an oral irrigator may comprise a fluid reservoir unit having only a first fluid reservoir containing a first fluid and a pump unit that may comprise only a first pump for selective pumping of the first fluid. In another example embodiment, an oral irrigator may comprise a pump unit that comprises a first pump, which first pump may be connected to a first and a second fluid reservoir. Generally, an oral irrigator may comprise a control unit that may be arranged to control a first pump only. In accordance with the present disclosure, an oral irrigator may comprise a control unit that is arranged to control at least a first pump such that a fluid jet parameter of a continuous or pulsating fluid jet emitted via a at least first outlet nozzle is varied over time.

The oral irrigator 1 shown in Fig. 1 further has a drive unit 250 coupled to the pump unit 230 for driving the at least first pump 231. The drive unit 250 may comprise a motor and it may further comprise a power source such as a rechargeable battery (e.g. a Li-ion accumulator) or the drive unit 250 may be connectable to mains voltage via a cord.

The oral irrigator 1 may have at least a first control element 260 that may be arranged at the outside of the base station 20, as schematically shown in Fig. 1. The first control element 260 may be coupled with the control unit 210 for, e.g., selectively setting an operation mode or for varying a variation parameter as will be explained in more detail further below. The first control element 260 may be a simple switch for e.g. switching between two or more operation modes; it may be realized as a slider element having several latching positions to e.g. switch between a plurality of operation modes; it may be realized as a turning knob for essentially continuously varying a parameter setting etc. In some example embodiments, the first control element 260 is realized as a touch sensitive LCD screen for realizing various control options. In some example embodiments, at least a second control element is provided, which second control element may be different to the first control element 260, e.g. the first control element could be a slider while the second control element is realized as a turning knob.

As is shown in Fig. 1, the oral irrigator 1 may have an indicator element 280 coupled to the control unit 210 for e.g. audibly, visibly or tangibly indicating a current operation mode. In the shown embodiment, the oral irrigator 1 further has a timer unit 290 that here has an indicator element 291 for indicating the lapse of a certain time period, e.g. to indicate that a two minute period has lapsed. In another embodiment, the timer unit 290 may be coupled to the control unit 210 and the control unit 210 may then either stop the operation at the end of the time period or may control the pump unit 230 such that a characteristic pumping behavior indicates the lapse of the time period in a tangible manner to the user (e.g. the pump unit 230 may stop pumping for a short period and may then produce a certain number of fluid jet pulses to indicate the lapse of the time period to a user).

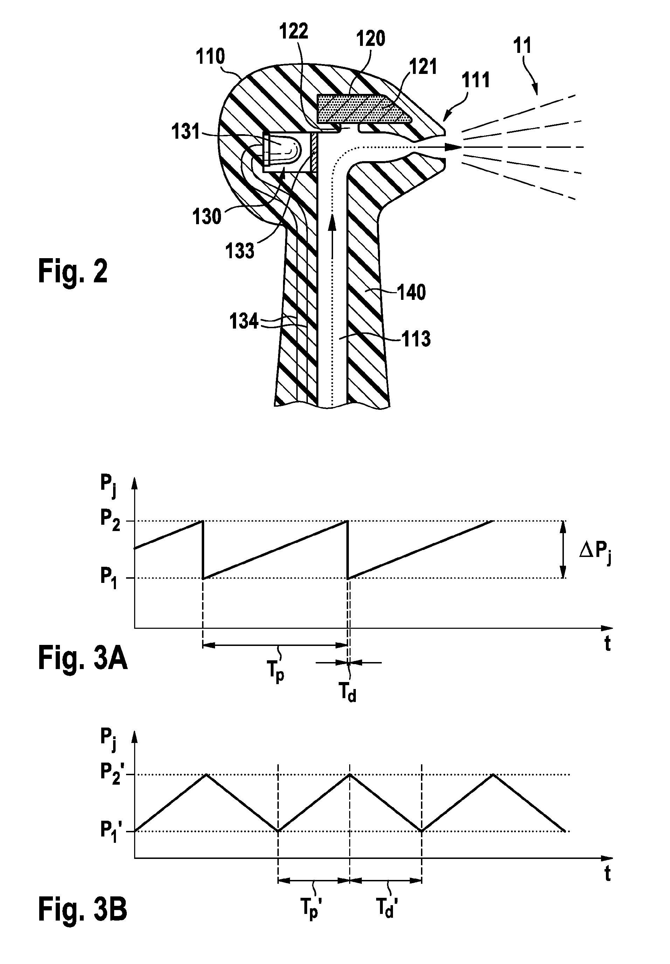

The outlet pipe 239 of the base station 20 may be connected with a first end of a flexible tube 30 and a second end of the flexible tube 30 may be connected with a fluid pipe 139 of the mobile part 10 to establish a fluid connection between the base station 20 and the mobile part 10. The mobile part 10 has a handle section 190 and an oral irrigator attachment 100. The oral irrigator attachment 100 may be realized as a detachable part for easy replacement in case the oral irrigator attachment 100 is worn out or for allowing each user to use an individual oral irrigator attachment, in particular for hygienic reasons. Here, the handle section 190 has a cylindrical housing 191 sized for being easily held in the hand of a user and a switch 192 for activating operation. Here, an electrical connection is established between the base station 20 and the mobile part 10 by at least one electrical wire 211 that is on one end connected with the control station 210 and on the other end with the switch 192. The electrical wire (or wires) 211 may be embedded in the material of the flexible tube 30. As will be explained with reference to Fig. 2, the electrical wires 211 may also be connected to further parts of the mobile part 10.

The oral irrigator attachment 100 has a tubular neck section 130 and a head section 110, where a first outlet nozzle 111 is provided at the head section 110 for emitting a fluid jet 11. The fluid jet 11 may be a continuous jet or a pulsating jet. In another embodiment, the oral irrigator has two outlet nozzles that may, e.g., be arranged opposite to each other so that the interdental areas can be simultaneously flushed from both sides.

In accordance with the present disclosure, the control unit 210 is arranged to control the at least first pump 231 in such a way that during operation a fluid jet parameter is automatically varied over time. Some examples of this variation of the fluid jet parameter are discussed with reference to Figs. 3A and 3B. The control unit 210 may in particular be coupled to a storage unit 270 in which the functional behavior of the variation of the fluid jet parameter is stored. Several such functional behaviors may be stored for a plurality of selectable operation modes. It is here to be noted that a pulsating jet having a constant pulse rate and constant pulse parameters is not considered a fluid jet where an automatic variation of a jet parameter happens, while e.g. a variation of the pulse frequency over time shall be considered a variation within the meaning of the present disclosure.

For a continuous fluid jet, e.g. the following fluid jet parameters may be varied (the following being an example list that is not seen as a complete list of possible fluid jet parameters - other fluid jet parameters may be considered as well):
- the fluid pressure;
- the flow rate;
- the mixture ratio between a first and a second fluid;
- the amount of an application substance mixed into the first fluid.

For a pulsed jet, e.g. the following fluid jet parameters may be varied (in addition to above mentioned parameters):
- the frequency of pulses (or more generally: the pulse pattern);
- the pulse length.

The oral irrigator may be arranged to have a learning mode in which the user may change one or several fluid jet parameters over time, which time history of the at least one fluid jet parameter is recorded and then stored in the storage unit 270. This recorded time variation may then be repeated by switching the oral irrigator into the "user defined" operation mode. Generally, there may be one, two or a plurality of such user defined operation modes.

In an example embodiment, an oral irrigator has a reservoir unit 220 (the reference numerals here refer to Fig. 1) that may comprise a first fluid reservoir 221 containing a first fluid 223. The first fluid reservoir 221 may be in fluid connection with a pump unit 230 via first fluid channel 225. The pump unit 230 may comprise a first pump 231 coupled to the first fluid reservoir 221 via the first fluid channel 225. The pump unit 230 may be coupled to a control unit 210, which control unit 210 is arranged to control the pump unit 230, i.e. the control unit 210 may be arranged to control the first pump 231 for selective pumping of the first fluid 223 from the first fluid reservoir 221 to an outlet pipe 239. Further features as described with reference to Fig. 1 may be added.

Fig. 2 is a schematic depiction of a cross-sectional cut through the head section 110 and upper part of the tubular neck section 140 of an exemplary oral irrigator attachment. The head section 110 comprises a first outlet nozzle 111 for emitting a continuous or pulsating fluid jet 11 (schematically indicated by dashed lines) during operation. A hollow fluid channel 113 is provided in the oral irrigator attachment to establish a fluid connection between a handle section 20 (as depicted in Fig. 1) and the head section 110. In the back of the head section 110, a light emitting unit 130 is arranged, which light emitting unit 130 comprises a first light emitting element 131. The first light emitting element 131 is here arranged behind a light transparent wall element 133 that seals the light emitting unit 130 from the fluid being transported through the fluid channel 113 during operation. The first light emitting element 131 is aligned with the first outlet nozzle 111 so that the light emitted by the first light emitting element 131 in operation illuminates the emitted fluid jet 11 and thus also illuminates the area in the oral cavity that is being treated by the fluid jet 11. In some example embodiments, a light emitting unit is additionally or alternatively arranged on top of the head part and is intended to illuminate the area lying in front of the first outlet nozzle 111. The light emitting element 131 may be powered via electric wires 134 that may be embedded into the material of the tubular neck section 140. These electric wires 134 may be connected with an energy source present in the mobile part 10 or in the base part 20 (e.g. wires 211 shown in Fig. 1 may extend into wires 134). In the shown example embodiment, a reservoir 120 containing a first application substance 121 is in fluid connection with the fluid channel 113 via a small connector channel 122 so that fluid can get in contact with the first application substance 121 in order to dissolve the first application substance 121 such that small amounts of application substance are carried along with the fluid jet 11. The first application substance 121 may be a tablet of a slowly dissolving material that may comprise e.g. an antiseptic such as chlorhexidine. In some example embodiments, a second or even more further application substances may be provided. In some example embodiments, a first or further application substance may be provided in a second or further fluid reservoir and may be selectively mixed with a first fluid, where the first fluid may in particular be water. It is stated that of course the light emitting unit 130 and the reservoir 120 are features that do not need to be seen in combination and the natural understanding of a skilled person is that these two features are independent and may each be realized without the other feature, while they may also be realized together.

In Fig. 3A the time variation of a fluid jet parameter Pj that may be achieved by controlling the pump unit via the control unit is schematically indicated. The fluid jet parameter Pj (e.g. the fluid pressure of a continuous jet) is here varied between two fluid jet parameter values P1 and P2, where the difference between the two parameter values is ΔPj = P2 - P1. At a certain time instant, the jet parameter Pj starts with a value P1 (which e.g. may be a relatively low fluid pressure achieved by a low pumping action) that is constantly increased over a time period Tp until it reaches the jet parameter value P2 (which e.g. might be a relatively high fluid pressure achieved by a high pumping action). During this time period Tp, the control unit controls the pump unit such that the pumping action per time unit is linearly increased such that the fluid jet pressure is constantly increased. When the fluid jet parameter value has reached P1, the control unit controls the pump unit to drop essentially instantly (i.e. within a very short time period Td that is achievable by the pump unit) to a lower pumping action to again start with jet parameter value P1 and to constantly increase the pumping action again. This time variation may repeat until operation of the oral irrigator is stopped or until a user changes a variation parameter via the first control element. In the present example, possible variation parameters would be the parameter values P1 and P2 (here the start value and the end value of the parameter range over which the fluid jet parameter Pj is varied) and the time periods Tp and Td (here the time periods of the raise and drop branches of the time variation of the fluid jet parameter Pj). Hence, a user may be able to modify the controlled variation over time of the fluid jet parameter Pj by setting one or several variation parameters to a different value via the at least first control element.

Fig. 3B schematically indicates the time variation of the fluid jet parameter Pj after a user has set new variation parameters P1', P2', Tp', and Td'. A different time behavior of the fluid jet parameter Pj results. In an embodiment, the oral irrigator has several pre-programmed operation modes in which at least one fluid jet parameter Pj is varied over time and which operation modes differ at least in one variation parameter, e.g. Figs. 3A and 3B may illustrate two different operation modes. The time variation of the fluid jet parameter Pj as depicted in Fig. 3A may be specifically beneficial for gum care treatment while the time variation of the fluid jet parameter Pj as depicted in Fig. 3B may be specifically beneficial for gum massaging. Further pre-programmed operation modes may exist that are, e.g., specifically beneficial for cleaning the interdental areas.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An oral irrigator (1) comprising:
a pump unit (230) comprising at least a first pump (231) being connected or being connectable to at least a first fluid reservoir (221) arranged for containing a first fluid (223);
a control unit (210) for controlling the pump unit (230);
at least a first outlet nozzle (111) for emitting fluid pumped from the first fluid reservoir (221) to the first outlet nozzle (111) during operation as a continuous or pulsating fluid jet (11);
wherein the control unit (210) is arranged to control the pump unit (230) during operation in at least a first operation mode such that at least a first fluid jet parameter (Pj) of the continuous or pulsating jet (11) is automatically varied over time.

2. The oral irrigator in accordance with claim 1, wherein the oral irrigator (1) comprises a second operation mode that differs from the first operation mode.

3. The oral irrigator in accordance with claim 1 or claim 2, wherein the oral irrigator (1) comprises at least a first control element (260) for setting at least a first variation parameter by which the automatic variation of the first fluid jet parameter (Pj) is modified.

4. The oral irrigator in accordance with any one of claims 1 to 3, wherein the oral irrigator (1) is arranged to emit at least a first application substance (224; 121).

5. The oral irrigator in accordance with claim 4, wherein the first application substance (224; 121) is mixed at least with the first fluid.

6. The oral irrigator in accordance with any one of claims 1 to 5, wherein the oral irrigator 81) comprises a second fluid reservoir (222) for containing a second fluid (224) different to the first fluid (222), optionally wherein the second fluid may be a first application substance.

7. The oral irrigator in accordance with claim 6, wherein the control unit (210) has an operation mode in which the control unit is arranged for alternately providing the first fluid (222) and the second fluid (224) at the first outlet nozzle (111).

8. The oral irrigator in accordance with any one of claims 1 to 7, wherein the oral irrigator (1) comprises a storage unit (270) for storing data corresponding to at least the temporal behavior of the at least first fluid jet parameter.

9. The oral irrigator in accordance with any one of claims 1 to 8, wherein the oral irrigator (1) comprises a learning mode in which the oral irrigator (1) is arranged to record data corresponding to a temporal behavior of the at least first fluid jet parameter.

10. The oral irrigator in accordance with any one of claims 1 to 9, wherein the oral irrigator (1) further comprises a timer unit (290) for visibly, audibly and/or tangibly indicating a time value.

11. The oral irrigator in accordance with any one of claims 1 to 10, wherein the oral irrigator (1) further comprises at least a first light emitting unit (130).

12. The oral irrigator in accordance with claim 11, wherein the control unit (210) is further arranged to automatically vary at least a first light parameter of the light emitting unit (130).

13. The oral irrigator in accordance with any one of claims 1 to 12 further comprising an indicator unit (280) for visibly, audibly and/or tangibly indicating an operation mode.

14. The oral irrigator in accordance with any one of claims 1 to 13, wherein an oral irrigator attachment (100) comprising the first outlet nozzle (111) is a detachable part of the oral irrigator (1).

15. The oral irrigator in accordance with claim 14, wherein the oral irrigator attachment (100) comprises a reservoir (120) containing a first application substance (121).
